Europäisches Patentamt

European Patent Office

Office européen des brevets

(19)

(11) Publication number: **0 256 628 B1**

# EUROPEAN PATENT SPECIFICATION

(12)

(45) Date of publication of patent specification: **06.03.91**   (51) Int. Cl.⁵: **B23Q 16/06**

(21) Application number: **87304968.8**

(22) Date of filing: **04.06.87**

(54) A device for indexing.

(30) Priority: **02.08.86 JP 182338/86**

(43) Date of publication of application:
**24.02.88 Bulletin 88/08**

(45) Publication of the grant of the patent:
**06.03.91 Bulletin 91/10**

(84) Designated Contracting States:
**DE FR GB IT**

(56) References cited:
**EP-A- 0 245 177      DE-A- 1 527 153**
**DE-C- 109 413        DE-C- 1 285 841**
**FR-A- 1 575 569      FR-A- 2 308 450**
**JP-A-55 112 753      US-A- 2 618 982**
**US-A- 3 186 260**

(73) Proprietor: **KAWATA CHUCK MANUFACTUR-
ING CO., LTD.**
**40 Koaza-honmachi Aza-syuchi
Tanbacho Funaigun Kyoto(JP)**

(72) Inventor: **Kawata, Yasuyuki**
**40 Koaza-honmachi Aza-syuchi
Tanbacho Funaigun Kyoto(JP)**

(74) Representative: **Seaborn, George Stephen et
al**
**c/o Edward Evans & Co. Chancery House
53-64 Chancery Lane
London WC2A 1SD(GB)**

## Description

The present invention generally relates to improvements in a device designed for indexing a work attached to a cutting device of a machining center at fixed angles according to the preamble of claim 1.

### The description of Prior Art

This kind of device for indexing , which a mechanical coupling or an electrical counting device is utilized to index a workpiece through fixed angles , has conventionally been known.

For example, the former is a device adapted for detecting an engagement between a plurality of index holes formed in concyclic positions in an index table and an index plunger, thereby transmitting revolutions of a driving motor through timing gears into a driving shaft and indexing a workpiece to rotate through fixed angles.

The latter is a device adapted for applying pulse signals to an indexing table by provisions of a pulse generator and treating so as to count the pulse signals by provisions of a counting device, thereby rotating the indexing table from a reference position through fixed angles by a driving motor and indexing a workpiece.

On the other hand, a device for manually indexing the workpiece so as to be adapted for unclamping, indexing and clamping the work, has been known.

The above device for indexing mechanically or electrically must be provided with an indexing table, various devices for actuating the indexing table and the like, for example driving shafts and timing gears. The device has, therefore, some defects which it leads to its cost-up due to its large size.

Though a tool of the cutting device is designed for controling in accordance with the prescribed programming of NC device, i.e. Numerical Control Device, the above-described device for indexing must be designed for actuating the indexing table, independent of machining, thus this machining including the indexing being extremely troublesome.

Futhermore, as the indexing table is actuated to rotate electrically, utilizing the other hydraulic or air pressure source, electrical wirings and hydraulic or air-pressure lines are required. Thus it prevents these wirings and lines from arranging a plurality of palette changers holding works on the table. This causes low productivity because a plurality of workpieces cannot be simultaneously machined.

DE-C-1 285 841 representing the clostest prior art discloses a device for indexing a workpiece including an indexing plate connected to an actuating shaft of an indexing table holding a workpiece and held by a stopper in position, a push bar for moving linearly relative to a base of the device, and an actuating means for engaging operatively in the push bar and rotating the indexing plate at fixed angles. The device for indexing is so constructed to index the work such that the actuating means rotates the indexing plate through fixed angles in accordance with a linear action of the push bar, the push bar being interlocked with an extra action.

### Summary of the invention

It is an object of the present invention to provide a device for indexing which is adapted for being simplified by utilizing an extra action other than the normal action of the tool attached to a cutting device of a machining centre.

It is another object of the present invention to provide a device for indexing which is adapted for machining a workpiece easily and automatically by programming an NC device so that the device may improve its productivity.

In accordance with the present invention, there is provided an index device including: a base or housing, an index table and a push bar, a drive shaft of said index table being supported for rotation in said housing, a workpiece being holdable on said index table in such a way that said index table can be rotated with said workpiece to index said workpiece, said base or housing carrying or accommodating operatively connecting means for operatively connecting said push bar to said drive shaft of the index table so that said index table is rotated through a predetermined angle in response to longitudinal movement of said push bar; characterized in that: said base or housing is mounted on a table of a machining centre, said machining centre including a cutting device having a tool, said machining centre including feed means for feeding said cutting device and said table relative to each other so that said workpiece is engaged with and machined by said tool, said machining centre including an NC device for numerically controlling said feed means; said push bar can be pushed and moved longitudinally by utilizing an extra relative movement between said cutting device and said table other than relative working movement therebetween for machining said workpiece; and said NC device includes means for programming for causing said extra relative movement between said cutting device and said table to thereby index said workpiece in addition to said relative working movement between said cutting device and said table to machine said workpiece.

Effect of the Invention

The present invention is so constructed to automatically index a workpiece in such a way as to reciprocatingly move the push bar of the device for indexing, interlocking with an extra action other than the normal action of a tool of a cutting device of a machining centre. The device is, therefore, simply constructed as a whole and can index a work by programming in the NC device, thus improving the productivity.

As any hydraulic or air-pressure source to the indexing table is not required, the space above the indexing table can be effectively available and can put palette changers holding a workpiece on the table. Therefore, its productivity may improve and its versatility of the device may also improve.

Brief description of the drawing

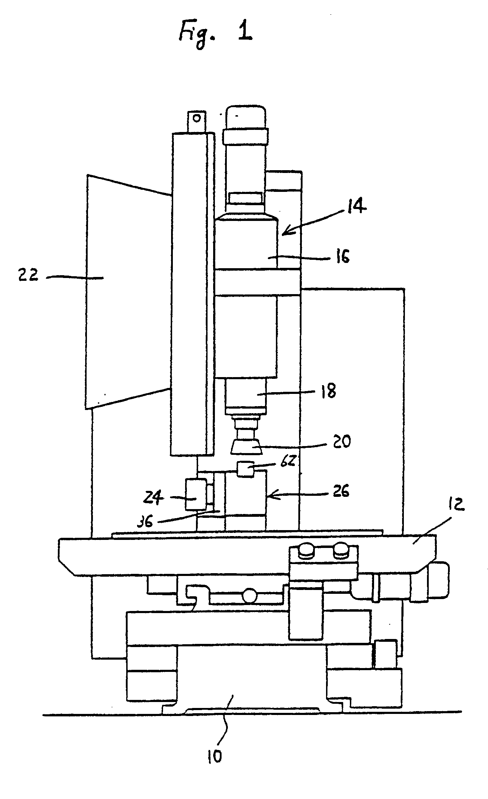

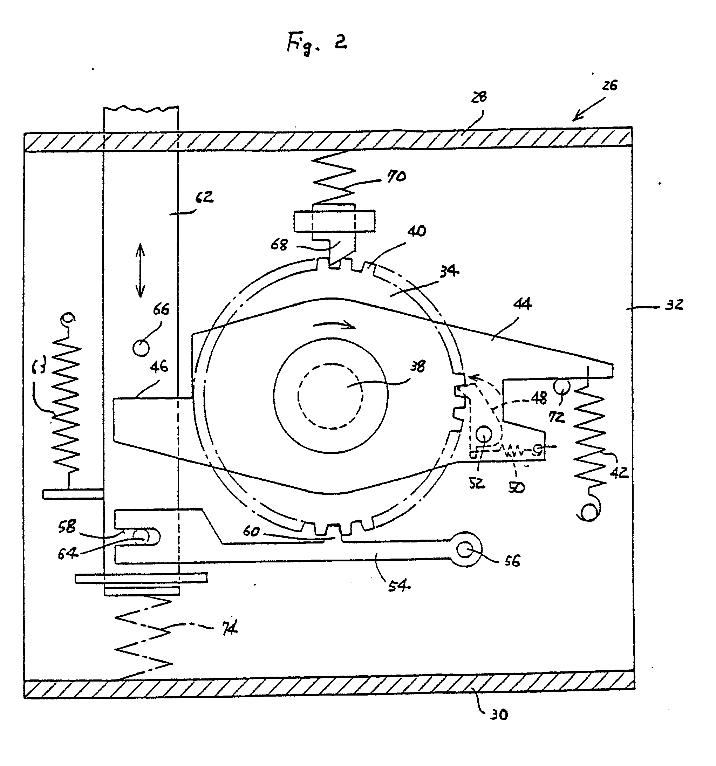

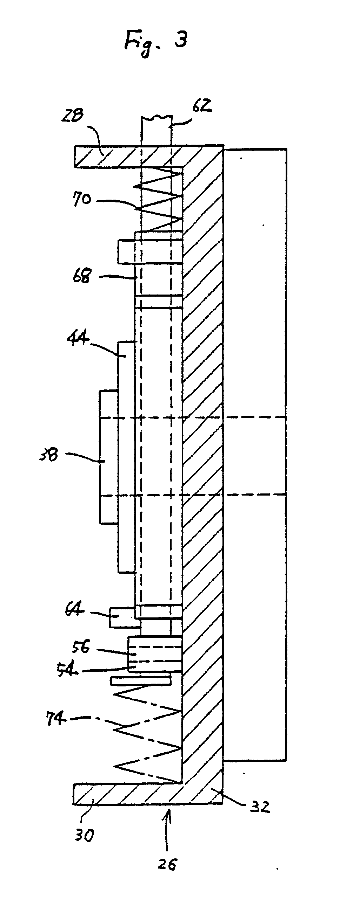

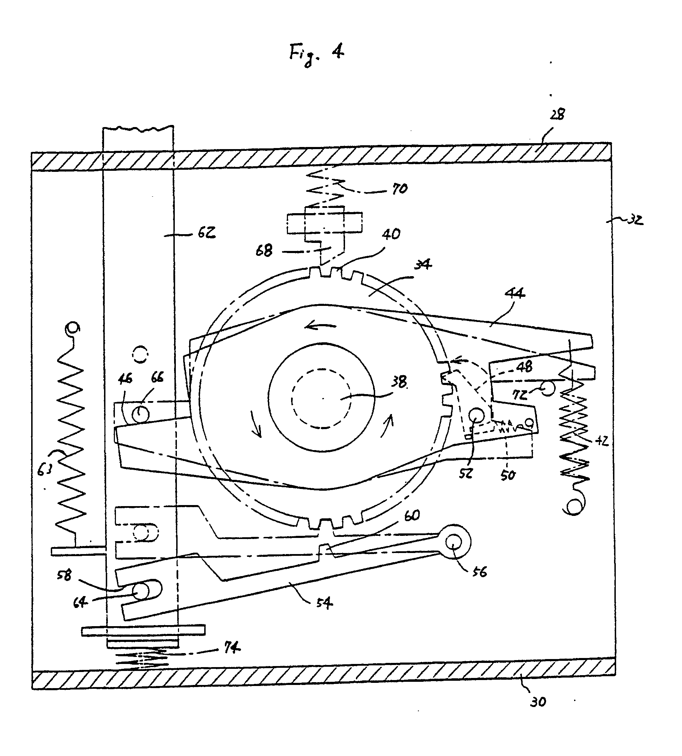

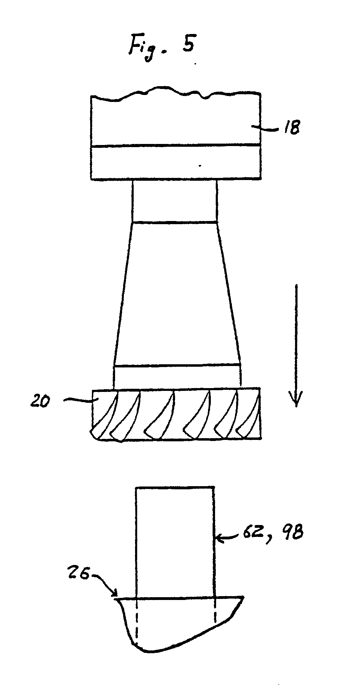

Figure 1-5 inclusive, illustrate a first embodiment. Figure 1 shows a whole front view of the construction which applies the device for indexing of the present invention to a machining centre. Figure 2 and 3 show partly broken away, a front view and a side view of the device for indexing. Figure 4 shows a view illustrating operation of the device for indexing and Figure 5 is an enlarged front view of a part of the device.

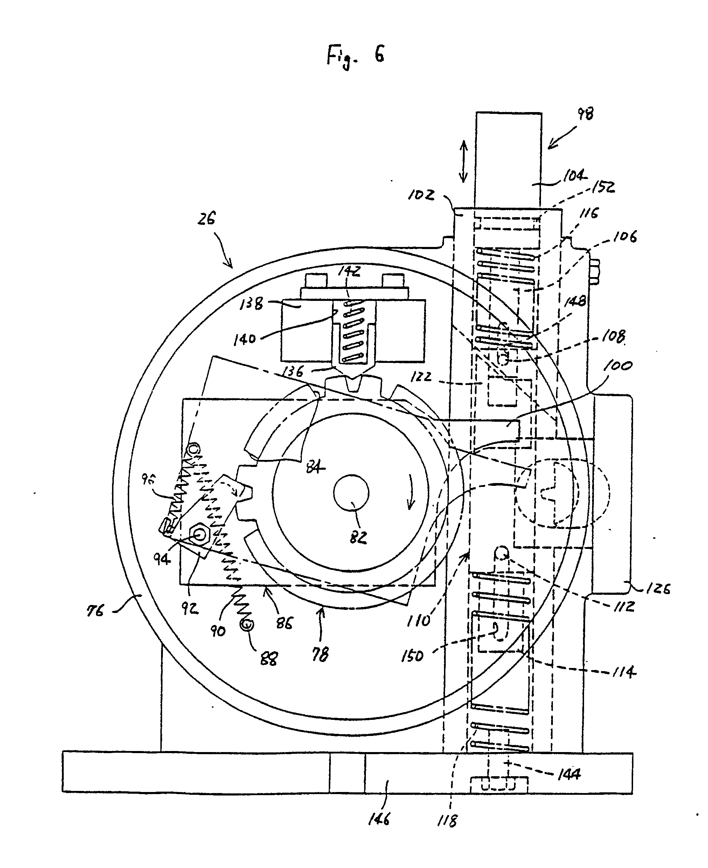

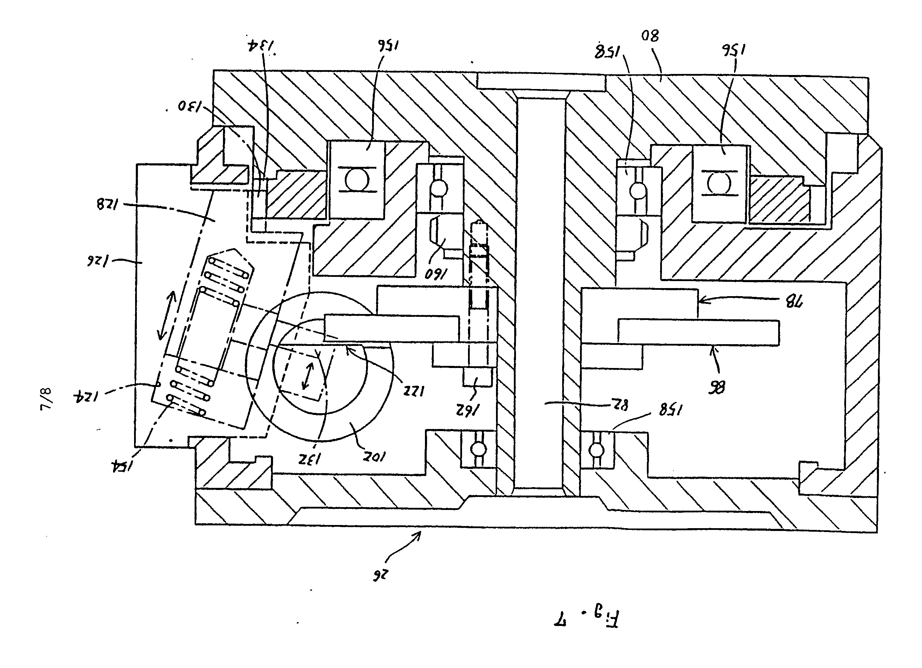

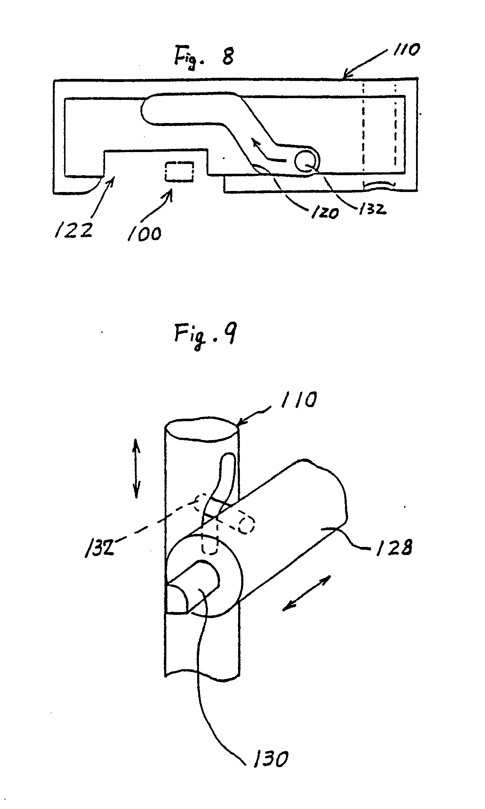

Figure 6-9 inclusive, illustrate a second embodiment. Figure 6 and 7 shows a front view and a plan view of the general whole construction of the device for indexing, respectively. Figure 8 shows a side view of a guide shaft and Figure 9 is a view illustrating engagement between a guide shaft and a stopper member.

Detailed description of the invention

(THE FIRST EMBODIMENT)

Refering now to Figure 1-5 inclusive, a first embodiment of the present invention will be described as follows.

Figure 1 shows a general construction of a machining centre including an index device according to the present invention, wherein a table (12) displaced to move horizontally on the base(10). Above the table(12) , a cutting device(14) is installed. The cutting device(14) comprises a spindle head(16) , a spindle(18) attached rotatably to the spindle head(16), the spindle(18) having a face cutter(20) , as a cutting tool , at its tip. Forward of the cutting device(14) , a tool box(22) holding various tools is installed.

On the table(12) , an index device(26) for actuating a workpiece is , as shown in Figure 2 and 3 , provided within a rectangular base(32) having a top flange(28) at its top and a bottom flange(30) at its bottom , respectively. In the base (32), an indexing plate(34) is rotatably supported about a shaft (38) connected to an indexing table(36) ( See Figure 1 ) holding the workpiece(24). Engaging claws or teeth (40) are formed along the circumferential surface of the indexing plate (34).

To the indexing plate(34) , a thin and elongate rotatable plate(44) is provided. The plate(44) is urged by a spring(42) in the clockwise sense ( as indicated by an arrow in Figure 2 ) relative to the indexing plate(34). The plate(44) forms an engaged portion(46) with one side thereof broken. On the other side of the plate(44) , a claw member or pawl (48), as an actuator, engaged in the engaging claws (40) is rotatably mounted to a supporting axis (52), urged by a spring (50) in the direction to be pressed towards the engaging claw (40) ( a direction of an arrow as indicated by a dotted line ) Thus an actuating means of the indexing plate (34) comprises the rotatable plate(44) , the engaged portion(46) and the claw member(48).

To the base(32) , a crank member(54) like an elongating rod , as a stopper , is provided to oscillare about an axis (56), the crank member(54) having a groove(58) at the tip and being provided with a crank pin or tooth (60) engaged in the claws (40) at the centre thereof.

To the base(32) , a push bar(62) like an elongate rod is reciprocatably provided, being urged by a spring(63) upwards ( the upward direction in Figure 2 ) , so that the push bar(62) is so constructed to be actuated , interlocking with an extra action other than the normal action of the face cutter(20). The push bar(62) is provided with a first pin(64) engaging in the groove(58) of the crank member(54) at the tip thereof and a second pin(66) engagable operatively with in the portion(46) of the rotating plate(44) at the centre thereof.

In addition, reference numeral(68) denotes a whirl-stop pin , which is attached to the top flange (28) and urged downwards by a spring(70), and reference numeral (72) denotes a stop for restricting rotation of the plate(44) in the clockwise sense in Figure 2 ( a direction of an arrow ). Reference numeral(74) denotes a spring for urging the push bar(62) backwards ( the upward direction in Figure 2 ), together with the spring(63) or instead of the spring(63).

Next , operation of the first embodiment will be described in detail with reference to Figure 4 and 5.

In case of indexing the workpiece(24) by the face cutter(20) attached to the cutting device(14) of the machining centre , the push bar(62) moves reciprocatingly, interlocking with an extra action other than the normal action of the face cutter(20) in accordance with the programming of an NC device.

In Figure 5 , when the face cutter(20) moves in the direction of an arrow therein , the push bar(62) moves in the downward direction ( the downward direction in Figure 4 ). Then the crank member(54) pivots about the axis(56) in the downward direction in Figure 4 and disengages the crank pin(60) from the engaging claws (40) of the indexing plate(34), so that the indexing plate(34) may rotate. Thereafter , the portion(46) is pressed downwards by the second pin(66) to rotate the plate(44) in the direction of an arrow in Figure 4 , so that the indexing plate(34) may be rotated by the upward movement of the claw member(48). As a result , one of the claws(40) presses the whirl-stop pin(68) upwards against an urging force of the spring (70), thus to disengage the whirl-stop pin(68) and the claw(40). Therefore , the indexing plate (34) rotates by only one pitch of the claws (40).

The face cutter(20) moves in the upward direction in Figure 5 to release the push bar(62) from the force pressed by the face cutter(20) , thus to move the push bar(62) in a upward direction with the aid of an urging force of the spring(63). Then , the plate(44) rotates gradually in the opposite direction and reaches to a position as indicated by the chain line in Figure 4 with the aid of the urging force of the spring(42), with the second pin(66) and the engaged portion(46) engaged with each other. The crank member(54) reaches a position as indicated by the chain line to pivot in the upward direction in Figure 4 as well, followed by an upward movement of the first pin (64),so that the crank pin-(60) is returned to its initial position and engaged in the following engaging claw(40) to stop rotation of the indexing plate(34). Thus the indexing plate(34) may be firmly stopped.

Therefore , the above index device(26) is so constructed to reciprocate the push bar(62) in a vertical direction in accordance with the programming in the NC device , utilizing an extra action other than the normal action of the face cutter(20) attached to the cutting device(14) and to index the workpiece(24) such that the indexing plate(34) may rotate itself through fixed angles by disengagement of the crank pin (60) from the engaging claws(40) , corresponding to one stroke of the push bar(62) within the index device(26). This results in simplifying the device without the need for providing various members for actuating the indexing table and the like , different from the conventional devices. This also results in automatic indexing by only programming in the NC device, taking the indexing of the workpiece(24) into account. Thus it is easy to machine the workpiece(24) and it improves its productivity.

There is no requirement for lines from a hydraulic or air-pressured source to the indexing table(36) , different from the conventional index device because the index device(26) utilizes an extra action other than the normal action of the face cutter(20) to index the workpiece(24).

As no electrical wiring is required , the space above the table(12) can be effectively available and a plurality of palette changers holding the workpiece(24) on the table (12) can be arranged . Thus the index device(26) can machine a plurality of workpiece (24) simultaneously and the index device(26) can also be actuated in a various and complicate way. This results in improving its productivity.

Furthermore , as any manual operation is not required while an operator is indexing the workpiece(24) and the workpiece(24) is automatically indexed in accordance with the programming in the NC device. Hence , it can machine the workpiece(24) continuously all day , i.e. for 24 hours , thus to improve its productivity further.

(THE SECOND EMBODIMENT)

Referring next to Figure 1 and Figure 6-9 inclusive , a second embodiment of the present invention will be described hereinafter. Some reference characters in a second embodiment designate the like or corresponding parts in the first embodiment , in case of like or corresponding parts in the first embodiment.

Referring now to these drawings , wherein there is shown an index device(26) for indexing a workpiece (24) on the table , which is slidably displaced on the base(10) in the horizontal direction. The index device (26) is, as illustrated in Figure 6 and 7 , supported such that an indexing plate(78) may rotate about a shaft(82) , as an actuating axis , attached to an indexing table (80). claws or teeth (84) are formed on the circumferential surface of the indexing plate (78).

In the rear side of the indexing plate(78) , a thin and elongate rotatable plate(86) is arranged. The plate(86) is urged by a spring (90) in the counterclockwise sense in Figure 6 , with one end of the spring(90) engaged in a pin(88) implanted on the housing(76). In one side end ( a left side in Figure 6 ) of the plate (86), a claw member or pawl(92) is engaged in the claws(84) , as an actuator , mounted rotatably to a supporting shaft(94) . This results in urging the engaging claws(84) in the direction to be pressed ( a direction of a dotted-line arrow in Figure 6 ). In the other side ( the right side in Figure 6 ) of the plate (86), a portion (100) engaged in the push bar(98) described hereinafter extends in the direction of one side of the index device(26). Thus an actuating means of the indexing plate(78) comprises the rotating plate(86) , the claw member (92) and the portion(100) actuated by the push bar(98).

On the other hand , in the rear side of the housing(76) , the push bar(98) is arranged to move reciprocatingly in a holding pipe(102) extending vertically. The push bar(98) comprises a pressing portion(104) arranged in the upper thereof , a guide shaft(110) connected operatively to the portion (104) by means of a first connecting pin(108) which projects outwards on a connecting rod(106) extending downwards, and a stopper shaft(114) connected to the guide shaft(110) by means of a second connecting pin(112). In addition , reference numeral (116) and (118) indicate an upper spring and a lower spring, respectively, by which the push bar(98) is urged in the backward direction, i.e, the upward direction in Figure 6. The push bar (98) is , therefore , subject to be a large urging force by the above spring (116) and (118).

On the outer surface of the guide shaft(110), a crank-like groove(120) extending vertically at the outer side ( the right side in Figure 6 ) and a cutout portion(122) at the front side are formed respectively , as illustrated in Figure 8 . Into the cutout portion(122) , the portion(100) of the rotating plate(86) is designed for fitting , thus to press the portion(100) downwards by downward movement of the push bar(98). Therefore , when the push bar(98) moves downwards, interlocking with an extra action other than the normal action of the face cutter (20), the plate(86) rotates in the clockwise sense in Figure 6 ( the sense as indicated by an arrow in Figure 6 )

In the side of the housing(76) (the right side in Figure 6 and 7 ) , a side member(126) having a fitted hole(124) extending obliquely in the horizontal direction is, as illustrated in Figure 7 , provided. In the fitted hole(124) , a cylindrical stopper member(128) , as a whirl-stop member , is arranged so as to be reciprocatingly movable in the direction as indicated by an arrow in Figure 7. The stopper member(128) is provided with a member(130) at its front end and an pin(132) at the inner portion , respectively, such that the pin(132) may slidingly move along the groove(120) of the guide shaft(110) , as illustrated in Figure 9 . Thus the stopper member(128) moves reciprocatingly within the fitted hole(124) , corresponding to the vertical action of the push bar(98), to engage or disengage between the member(130) with the whirl-stop gear(134) of the indexing table(80). Hence , a stoppage of the indexing plate(78) is controlled.

In addition , in Figure 6 , reference numeral (136) denotes a whirl-stop pin , which is slidably attached to the fitted hole(140) of the holding member (138) arranged in the upper portion of the housing(76). The whirl-stop pin(136) acts as a stopper of the indexing plate(78), being urged by a spring(142) in the downward direction. Reference numeral(144) denotes a stopper bolt which projects above a lower base(146) and controls a downward movement of the push bar(98). Reference numeral (148) denotes a groove in which slides the first connecting pin(108) formed on the connecting rod (106). Reference numeral(150) denotes a groove in which slides the second connecting pin(112) formed on the holding pipe(102) and reference numeral(152) denotes an O-ring. In Figure 7 , reference numeral(154) denotes a spring to urge the stopper member(128) forwards, and reference numerals(156) and (158) denotes a thrust bearing and ball bearings, respectively. Reference numeral(160) denotes a check nut , and reference numeral (162) denotes a set bolt for integrally securing the indexing plate(78) to the indexing table(80).

Next , operation of the second embodiment will be described in detail with reference to Figure 5-9.

In these drawings , when the workpiece(24) is indexed by the face cutter(20) attached to the cutting device(14) of the machining centre , the push bar(98) moves reciprocatingly, interlocking with an extra action other than the normal action of the face cutter(20) in accordance with the programming in an NC device.

In Figure 5 , the face cutter(20), when it moves in the direction of an arrow therein, presses on the push bar(98) to move the push bar in the forward direction ( a downward direction in Figure 6 ). As the guide shaft(110) of the push bar(98) moves downwards,the pin(132) moves along the groove(120) of the guide shaft(110) in the direction of an arrow in Figure 8. Then the stopper member(128) moves backwards ( an upward direction in Figure 7 ) to disengage member(130) of the stopper member(128) from the whirl-stop gear(134). The indexing plate(78) may, therefore , rotate.

Further , when the guide shaft(110) moves downwards , the upper portion of the cutout portion(122) presses the portion(100) downwards to rotate the plate(86) in the clockwise sense in Figure 6. Thus the indexing plate(86) is rotated by the claw member(92) to move the whirl-stop pin(136) upwards against the force of the spring(142) and to the whirl-stop pin(136) from the claws(84). As a result , the indexing plate (78) may rotate itself through a fixed angle to index the work (24) firmly. In addition , when the rotation of the indexing plate (78) corresponds to one pitch of the claws(84), the whirl-stop pin(136) returns in its original position to stop the rotation of the indexing plate(78) firmly . Thus the whirl-stop pin(136) reengages in the claws(84).

When the face cutter(20) moves upwardly in Figure 5 to cease pressing on the push bar(98), the push bar (98) is moved upwardly in Figure 6 by means of both an upper spring(116) and a lower spring(118). As a result , the plate (86) rotates in the opposite sense of an arrow in Figure 6 with the aid of the urging force of the spring (90) to disengage the cutout portion(122) of the guide shaft(110) from the portion(100). At the same time, the engaging pin(132) moves along the groove(120) in the opposite direction of an arrow in Figure 8 to return in its initial position as indicated by a solid line therein. Thus the stopper member(128) moves in the forward direction( a downward direction in Figure 7 ) with the aid of the spring(154) to engage between the portion (130) of the stopper member-(128) and the whirl-stop gear(134). The indexing plate(78) then stop its rotation and is held firmly in position within the housing(76).

Therefore , the second embodiment may obtain the same operations and effects as the first embodiment may obtain.

**Claims**

1. An index device (26) including:

a base or housing (32, 76), an index table (36) and a push bar (62, 98), a drive shaft (38, 82) of said index table (36) being supported for rotation in said housing (32, 76), a workpiece (24) being holdable on said index table (36) in such a way that said index table (36) can be rotated with said workpiece (24) to index said workpiece (24), said base or housing (32, 76) carrying or accommodating operatively connecting means for operatively connecting said push bar (62, 98) to said drive shaft (38, 82) of the index table (36) so that said index table (36) is rotated through a predetermined angle in response to longitudinal movement of said push bar (62, 98);

characterized in that:

said base or housing (32, 76) is mounted on a table (l2) of a machining centre, said machining centre including a cutting device (14) having a tool (20), said machining centre including feed means for feeding said cutting device (14) and said table (12) relative to each other so that said workpiece (24) is engaged with and machined by said tool (20), said machining centre including an NC device for numerically controlling said feed means;

said push bar (62, 98) can be pushed and moved longitudinally by utilizing an extra relative movement between said cutting device (14) and said table (12) other than relative working movement therebetween for machining said workpiece (24); and

said NC device includes means for programming for causing said extra relative movement between said cutting device (14) and said table ( 12 ) to thereby index said workpiece (24) in addition to said relative working movement between said cutting device (14) and said table (12) to machine said workpiece (24).

2. An index device as defined in claim 1 in which said feed means comprises means for feeding said table (12) in two horizontal directions perpendicular to each other and means for feeding said cutting device (14) in a vertical direction, said push bar (62, 98) being engaged with said tool (20) of said cutting device (14) and pushed and moved downwardly by said tool (20) when said cutting device (14) is moved downwardly.

3. An index device as defined in claim 2 further comprising spring means (63, 74, 116, 118) resiliently urging said push bar (62, 98) upwardly to an initial position thereof, whereby when said cutting device (14) is moved downwardly said push bar (62, 98) is moved downwardly from said initial position and when said cutting device (14) returns upwardly the spring means moves the push bar upwardly back to its initial position and said index table (36) is rotated through said predetermined angle each time said push bar (62, 98) performs such downward and upward movement.

4. An index device as defined in claim 3 in which said operatively connecting means comprises;

an index plate (34, 78) including teeth (40, 84) at the periphery thereof and fixedly connected with said drive shaft (38, 82) of the index table (36);

stopper means (54, 130, 134) for locking said index plate (34, 78) and said drive shaft (38, 82) of the index table (36) against rotation and unlocking the index plate and the drive shaft in respponse to longitudinal movement of said push bar (62, 98);

a rotatable plate (44, 86) supported on said drive shaft (38, 82) for rotation relative to said index plate (34, 78), the plate rotating in one sense through an angle in response to said longitudinal movement of said push bar (62, 98);

a claw mebber or pawl (48, 92) provided on said rotatable plate (44, 86) and engagable with said teeth (40, 84) of said index plate (34, 78) to rotate said index plate (34, 78) through an angle from an initial position;

spring means (42, 90) for rotating said rotatable plate (44, 86) back to its original position;

a whirl stop pin (68, 136) engaging with said teeth (40, 84) of said index plate (34, 78) for preventing said index plate (34, 78) from rotating in the sense opposite to said one sense.

**Revendications**

1. Dispositif de mise au point (36) comprenant:
une base ou un logement (32, 76), une table à transfert circulaire (36), ainsi qu'une barre de poussée (62, 98), un arbre d'entraînement (38, 82) de la table à transfert circulaire (36) étant supporté en rotation dans le logement (32, 76), une pièce à usiner (24) pouvant être maintenue sur la table à transfert circulaire (36) de telle sorte que la table à transfert circulaire (36) puisse effectuer des rotations, conjointement avec la pièce à usiner (24), afin de mettre au point cette pièce à usiner (24), des moyens à raccordement en entraînement étant supportés par ou logés au sein de la base ou du logement (32, 76), ces moyens étant destinés à raccorder en entraînement la barre de poussée (62, 98) à l'arbre d'entraînement (38, 82) de la table à transfert circulaire (36), de telle sorte que la table à transfert circulaire (36) effectue des rotations dans un angle prédéterminé en réponse au mouvement longitudinal de la barre de poussée (62, 98);
**caractérisé en ce que:**
la base ou le logement (32, 76) est monté sur une table (12) d'une machine universelle d'usinage, cette dernière comprenant un dispositif de coupe (14) équipé d'un outil (20), la machine universelle d'usinage comprenant des moyens d'amenée destinés à amener le dispositif de coupe (14) et la table (12) l'un par rapport à l'autre, de telle sorte que la pièce à usiner (24) vient se mettre en contact avec l'outil (20) pour être usinée par ce dernier, la machine universelle d'usinage comprenant un dispositif à commande numérique destiné à commander numériquement le moyen d'amenée;
la barre de poussée (62, 98) peut être poussée et déplacée longitudinalement en faisant appel à un mouvement relatif supplémentaire entre le dispositif de coupe (14) et la table (12), autre que le mouvement de travail relatif entre ces derniers, afin d'usiner la pièce (24); et
le dispositif à commande numérique comprend un moyen de programmation destiné à provoquer le mouvement relatif supplémentaire entre le dispositif de coupe (14) et la table (12), pour ainsi mettre au point la pièce usinée (24), en plus du mouvement de travail relatif entre le dispositif de coupe (14) et la table (12), afin d'usiner la pièce (24).

2. Dispositif de mise au point selon la revendication 1, dans lequel le moyen d'amenée comprend un moyen destiné à amener la table (12) dans deux directions horizantales, perpendiculaires l'une à l'autre, ainsi qu'un moyen destiné à amener le dispositif de coupe (14) en direction verticale, la barre de poussée (62, 98) venant se mettre en contact avec l'outil (20) du dispositif de coupe (14) et étant poussée et déplacée vers le bas par l'intermédiaire de l'outil (20), lorsque le dispositif de coupe (14) se déplace vers le bas.

3. Dispositif de mise au point selon la revendication 2, comprenant, en outre, des moyens de ressort (63, 74, 116, 118) procurant une pression èlastique de la barre de poussée (62, 98) vers le haut, en direction d'une position initiale de cette dernière, dispositif dans lequel, lorsque le dispositif de coupe (14) se déplace vers le bas, la barre de poussée (62, 98) se déplace vers le bas depuis sa position initiale et lorsque le dispositif de coupe (14) retourne vers le haut, le moyen de ressort déplace la barre de poussée vers le haut en retour à sa position initiale et la table à transfert circulaire (36) effectue des rotations selon l'angle prédéterminé, chaque fois que la barre de poussée (62, 98) effectue ce mouvement descendant et ascendant.

4. Dispositif de mise au point selon la revendication 3, dans lequel le moyen de raccordement en entrainement comprend:
un disque porte-butée (34, 78) comprenant des dents (40, 84) à sa périphérie et étant reliée à demeure a l'arbre d'entraînement (38, 32) de la table à transfert circulaire (36);
des moyens d'arrêt (54, 130, 134) destinés à bloquer le disque porte-butée (34, 78) et l'arbre d'entrainement (38, 82) de la table à transfert circulaire (36) à l'encontre de la rotation, et destinés à débloquer le disque porte-butée et l'arbre d'entrainement en réponse a un mouvement longitudinal de la barre de poussée (62, 98);
une plaque rotative (44, 86) supportée sur l'arbre d'entraînement (38, 82), destinée à effectuer des rotations par rapport au disque porte-butée (34, 78), la plaque tournant dans un sens et parcourant un angle en réponse au mouvement longitudinal de la barre de poussée (62, 98);

un organe à griffe ou cliquet (48, 92) prévu sur la plaque rotative (44, 86) et qui vient se mettre en contact avec les dents (40, 84) du disque portebutée (34, 78), afin de faire tourner ce disque portebutée (34, 78) en parcourant un angle à partir d'une position initiale ;

des moyens de ressort (42, 90) destinés à faire tourner la plaque rotative (44, 86), en retour, jusqu'à sa position originale;

une broche (68, 136) destinée à arrêter le mouvement tourbillonnaire, qui vient se mettre en contact avec les dents (40, 84) du disque porte-butée (34, 78) afin d'empêcher cette dernière de tourner dans le sens opposé au premier sens.

## Ansprüche

1.  Einstellvorrichtung (26) mit:
    Einem Gestell oder einem Rahmen (32,76), einem Einstelltisch (36) und einem Schubstab (62,98), einer Antriebswelle (38,82) des Einstelltisches (36), die für eine Drehbewegung in dem Rahmen (32,76) gehalten ist, einem Werkstück (24), welches auf dem Einstelltisch (36) so gehalten ist, daß der Einstelltisch (36) mit dem Werkstück (24) gedreht werden kann, um das Werkstück (24) auf eine Einstellmarke zu stellen, wobei das Gestell oder der Rahmen (32,76) betriebsbereit Verbindungsmittel zum betriebsbereiten Verbinden des Schubstabes (62,98) mit der Antriebswelle (38,92) des Einstelltisches (36) trägt oder aufnimmt, so daß der Einstelltisch (36) um einen bestimmten Winkel entlang der Longitudinalbewegung der Schubstange (62,98) gedreht wird, dadurch **gekennzeichnet**, daß das Gestell oder der Rahmen (32,76) auf einem Tisch (12) eines Maschinenzentrums, welches eine Schneidvorrichtung (l4) und ein Werkzeug (20) aufweist, montiert ist, wobei das Maschinenzentrum Zuführmittel zum Zuführen der Schneidvorrichtung (14) und des Tisches (12) relativ zueinander einschließt, so daß das Werkstück (24) mit dem Werkzeug (20) in Eingriff steht und von diesem bearbeitet wird, wobei das Maschinenzentrum eine NC-Vorrichtung zur numerischen Kontrolle der Zuführmittel einschließt; die Schubstange (62,98) unter Ausnutzung einer gesonderten Relativbewegung zwischen der Schneidvorrichtung (14) und dem Tisch (12) angetrieben und longitudinal bewegt werden kann, abgesehen von der relativen Arbeitsbewegung dazwischen zum Bearbeiten des Werkstücks (24); und die NC-Vorrichtung Mittel zum Programmieren des Erzeugens der gesonderten Relativbewegung zwischen der Schneidvorrichtung (14) und dem Tisch (l2) beinhaltet, um dadurch das Werkstück (24) zusätzlich zu der relativen Arbeitsbewegung zwischen der Schneidvorrichtung (14) und dem Tisch (12) zum Bearbeiten des Werkstücks (24) auf eine Einstellmarke zu stellen.

2.  Einstellvorrichtung gemäß Anspruch 1, in welcher die Zuführmittel Mittel zum Zuführen des Tisches (12) in zwei horizontalen Richtungen, senkrecht zueinander, und Mittel zum Zuführen der Schneidvorrichtung (14) in einer vertikalen Richtung umfaßt, wobei die Schubstange (62,98) mit dem Werkstück (20) der Schneidvorrichtung (14) in Eingriff steht und angetrieben und nach abwärts durch das Werkzeug (20) bewegt wird, wenn die Schneidvorrichtung (14) abwärts bewegt wird.

3.  Einstellvorrichtung gemäß Anspruch 2, weiterhin Federmittel (63,64,116,118) aufweisend, die die Schubstange (62,98) elastisch zu deren Anfangsposition aufwärts antreiben, wobei, wenn die Schneidvorrichtung (14) abwärts bewegt wird, die Schubstange (62,98) von ihrer Anfangsposition abwärts bewegt wird und, wenn die Schneidvorrichtung (14) nach oben zurückkehrt, die Federmittel der Schubstange nach oben in ihre Anfangsstellung zurückbewegen und der Einstelltisch (36) jedesmal um einen vorbestimmten Winkel gedreht wird, wenn die Schubstange (62,98) die Aufund Abwärtsbewegung durchführt.

4.  Einstellvorrichtung gemäß Anspruch 3, in welcher die Verbindungsmittel betriebsbereit umfassen: Eine Einstellplatte (34,78) mit Zähnen (40,84) an deren Umfang, die fest mit der Antriebswelle (38,82) des Einstelltisches (36) verbunden ist; Haltemittel (54,130,134) zum Halten der Einstellplatte (34,78) und der Antriebswelle (36,82) des Einstelltisches (36) bezüglich der Drehbewegungs und zum Freigeben der Einstellplatte und der Antriebswelle ansprechend auf eine Longitudinalbewegung der schubstange (62,98); eine Drehplatte (44,86), gehalten an der Antriebswelle (38,82) für eine Drehbewegung relativ zu der Einstellplatte (34,78), wobei die Platte sich in einem Drehsinn um einen Winkel entsprechend der Longitudinalbewegung der Schubstange (62,98) dreht; ein Halteteil oder eine Klaue (48,92), angeordnet an der Drehplatte (44,86) und mit den Zähnen (40,84) der Einstellplatte (34,78) in Eingriff bringbar, um die Einstellplatte (34,78) um einen Winkel von einer Anfangsposition zu drehen; Federmittel (42,90) für eine Drehbewegung der Drehplatte (44,86) zurück zu ihrer ursprünglichen Position;
einen Wirbel-Stoppstift (68,136), der mit den Zähnen (40,84) der Einstellplatte (34,78) in Eingriff bringbar ist, um zu verhindern, daß sich die Einstellplatte (34,78) in umgekehrtem Sinne zu dem einen Drehsinn dreht.

Fig. 1

Fig. 2

Fig. 3

Fig. 4

Fig. 5

Fig. 6

Fig. 7

7/8

16

Fig. 8

Fig. 9